# EUROPÄISCHE PATENTSCHRIFT

(11) **EP 4 303 684 B1**
(45) Veröffentlichungstag und Bekanntmachung des Hinweises auf die Patenterteilung: **27.11.2024**
(21) Anmeldenummer: 23173274.4
(22) Anmeldetag: 15.05.2023
(51) Int. Cl.: G05D 1/242, G05D 1/244, G05D 1/622

(54) **REDUNDANTES SICHERHEITSSYSTEM UND VERFAHREN MIT EINEM REDUNDANTEN SICHERHEITSSYSTEM**
REDUNDANT SECURITY SYSTEM AND METHOD HAVING A REDUNDANT SECURITY SYSTEM
SYSTÈME DE SÉCURITÉ REDONDANT ET PROCÉDÉ AVEC UN SYSTÈME DE SÉCURITÉ REDONDANT

(30) Priorität: 08.07.2022 DE 102022117036
(43) Veröffentlichungstag der Anmeldung: 10.01.2024
(73) Patentinhaber: SICK AG, 79183 Waldkirch (DE)
(72) Erfinder: Ams, Mathias, 79211 Denzlingen (DE); Schwörer, Stefan, 77978 Schuttertal (DE); Mosgalewsky, Eduard, 79423 Heitersheim (DE); Röwekämper, Jörg, 79183 Waldkirch (DE); Tavanshi, Santosh, 79183 Waldkirch (DE)

(56) Entgegenhaltungen:
- DE-A1- 102019 128 782
- DE-U1- 202019 106 569
- US-A1- 2004 189 468

## Beschreibung

Die vorliegende Erfindung betrifft ein redundantes Sicherheitssystem gemäß dem Oberbegriff von Anspruch 1 und ein Verfahren mit einem redundanten Sicherheitssystem gemäß dem Oberbegriff von Anspruch 23.

Die Erfindung befasst sich mit der sicheren Lokalisierung von mobilen Maschinen bzw. mobilen Arbeitsmaschinen (wie z.B. mobilen Robotern und mobilen automatisierten bzw. autonomen Transportfahrzeugen usw.) beispielsweise autonomen mobilen Robotern, auch AMR genannt. Es geht bei der Erfindung darum, die Position dieser AMR sicher zu erkennen und in Abhängigkeit von dieser Position beispielsweise die Sicherheitsfunktion umzuschalten.

Autonome mobile Roboter bzw. autonome mobile Fahrzeuge, speziell wenn es sich um schwerere Typen handelt, werden primär durch eine Sicherheitsfunktion Kollisionsvermeidung abgesichert, d.h. die Umgebung wird vorzugsweise durch einen Sicherheitslaserscanner erfasst. Sobald sich ein Objekt in der Umgebung befindet, wird die Bewegung des autonomen Fahrzeugs beeinflusst, so dass das autonome Fahrzeug selbst die Kollision verhindert. Dies kann zum temporären Stopp des autonomen Fahrzeugs führen.

Es gibt allerdings Situationen, in denen auf die Primärsicherheitsfunktion der Kollisionsvermeidung verzichtet werden muss, da diese sonst den Automatisierungsprozess behindern würde. Dies sind insbesondere Situationen, wie Andock- und Kollaborationsmanöver des autonomen Fahrzeugs an stationäre Maschinen, Durchfahren von Engstellen, usw. In diesen Situationen wird dann die Primärsicherheitsfunktion abgeschaltet, da aber nicht eindeutig festgestellt werden kann, ob sich das autonome Fahrzeug hierzu auch and der vorgesehenen Position befindet, kann es zu Einschränkungen in der funktionalen Sicherheit kommen. Weiter kann auch eine Produktivität des autonomen Fahrzeugs stark gemindert sein, da Geschwindigkeiten und Kräfte des Antriebs des AMR zu reduzieren sind.

Die Primärsicherheitsfunktion Kollisionsvermeidung wird nach dem Stand der Technik nicht anhand der Kenntnis der Position, sondern anhand von anderen Merkmalen umgeschaltet.

Beispielsweise werden im Blickfeld des Laserscanners statische Objekte erkannt und das autonome Fahrzeug wird kurzzeitig gestoppt. Mit dem Scanner wird dann mittels Konturerkennungsfeldern geprüft, ob anhand der detektierten Kontur abgeleitet werden kann, ob es sich um einen Sicherheitsort handelt.

Alle bisher bekannten Ansätze haben aber das Problem, dass ein Sicherheitsort nicht eindeutig im Sinne der funktionalen Sicherheitstechnik identifiziert werden kann. Daher sind diese Ansätze dann immer begleitet von weiteren Sicherheitsmaßnahmen, beispielsweise der Verminderung der Geschwindigkeit und Kraft des autonomen Fahrzeugs, welche zu Lasten der Produktivität des Automatisierungsprozesses gehen.

Eine funktional sichere Verarbeitung der Lokalisierungsinformation ist nach heutigem Stand der Technik nicht möglich, da im Moment hier technische Voraussetzungen fehlen:
- Ein Lokalisierungssystem selbst ist noch nicht funktional sicher ausgeführt, d.h. die ermittelten Positionen sind im Sinne der funktionalen Sicherheit als nicht sicher zu definieren.
- Messdaten der Laserscanner, die die Eingangsdaten für ein LIDAR-basiertes Lokalisierungssystem darstellen, sind aktuell im Sinne der funktionalen Sicherheit als nicht sicher zu definieren.
- Es gibt noch keine standardisierte Bus-/Kommunikationsprotokolle der funktionalen Sicherheit, die es ermöglichen eine große Menge von Messdaten sicher zu übertragen.
- Es gibt aktuell noch keine Sicherheitssteuerung, die ausreichend leistungsfähig ist, um basierend auf empfangenen sicheren Messdaten eine sichere Lokalisierung zu berechnen.

Alle aktuellen Lösungen sind nicht in der Lage, einen Sicherheitsort im Sinne der funktionalen Sicherheit eindeutig zu erkennen. Daher führt die eingeleitete Systemreaktion immer zu einer Reduzierung der Sicherheit oder zu einer Verminderung der Produktivität in diesen Situationen, beispielsweise eine Reduzierung der Antriebsleistung zur Reduzierung einer Geschwindigkeit eines autonomen Fahrzeugs.

Die DE102019128782A1 offenbart eine bewegbare Maschine, mit einem Sicherheitssystem, mit einer Sicherheitssteuerung, mit einem Lokalisierungssystem, mit einem Entfernungssensor zur mindestens flächigen Überwachung eines Überwachungsbereiches und mit einer Konturerkennungseinheit, wobei mittels dem Lokalisierungssystem eine Position eines Sicherheitspunktes identifizierbar ist, und mittels dem Entfernungssensor und der Konturerkennungseinheit eine Kontur des Sicherheitspunkts identifizierbar ist, wobei bei Identifizierung der Position des Sicherheitspunktes und der Kontur des Sicherheitspunktes mittels der Sicherheitssteuerung eine Veränderung der Sicherheitsfunktion des Sicherheitssystems erfolgt.

Die DE 20 2019 106 569 U1 offenbart ein Sicherheitssystem zur Lokalisierung einer bewegbaren Maschine, mit einer Sicherheitssteuerung, mit mindestens einem Funkortungssystem, mit mindestens einem Sensor zur Positionsbestimmung, wobei das Funkortungssystem stationär angeordnete Funkstationen aufweist, wobei an der bewegbaren Maschine mindestens ein Funktransponder angeordnet ist, oder wobei das Funkortungssystem stationär angeordnete Funktransponder aufweist, wobei an der bewegbaren Maschine mindestens drei Funkstationen angeordnet sind, wobei mittels dem Funkortungssystem Positionsdaten der bewegbaren Maschine ermittelbar sind, wobei die Positionsdaten von der Funkstation oder dem Funktransponder des Funkortungssystems an die Sicherheitssteuerung übermittelbar sind und mittels dem Sensor Positionsdaten der bewegbaren Maschine ermittelbar sind, wobei die Sicherheitssteuerung ausgebildet ist, die Positionsdaten des Funkortungssystems und die Positionsdaten des Sensors zu vergleichen und bei einer Übereinstimmung geprüfte Positionsdaten zu bilden.

Die US 2004 0189468 A1 offenbart einen optischen Sensor mit einem Distanzsensorelement, bestehend aus einem Sendelichtstrahlen emittierenden Sender und einem Empfangslichtstrahlen empfangenden Empfänger. Mittels einer Ablenkeinheit werden die Sendelichtstrahlen abgelenkt, so dass diese periodisch einen Überwachungsbereich überstreichen. In einer Auswerteeinheit sind als Parameter mehrere Schutzfelder abgespeichert, welche jeweils vorgegebene Bereiche des Überwachungsbereichs bilden, wobei wenigstens eines der abgespeicherten Schutzfelder aktivierbar ist. In der Auswerteeinheit wird in Abhängigkeit der Empfangssignale am Ausgang des Empfängers ein Objektfeststellungssignal generiert, welches angibt, ob sich ein Objekt innerhalb des aktivierten Schutzfeldes befindet oder nicht. An die Auswerteeinheit ist eine Kommunikationsschnittstelle angeschlossen, über welche Aktivierungssignale zur Aktivierung des Schutzfeldes einlesbar sind.

Eine Aufgabe der Erfindung besteht darin, ein verbessertes redundantes Sicherheitssystem für eine mobile Maschine bereitzustellen.

Die Aufgabe wird gemäß Anspruch 1 gelöst durch eine redundantes Sicherheitssystem für eine mobile Maschine, mit mindestens einer Steuerung, mit einem ersten Lokalisierungssystem zur Ortung einer Position mindestens eines Sicherheitsortes, mit einem Erfassungssystem zur Erfassung eines Merkmals des Sicherheitsortes, wobei mittels dem Lokalisierungssystem eine Position des Sicherheitsortes erfassbar ist, und mittels dem Erfassungssystem ein Merkmal des Sicherheitsortes erfassbar ist, wobei bei Erfassung der Position des Sicherheitsortes und des Merkmals des Sicherheitsortes mittels der Steuerung ein zu dem Sicherheitsort zugehöriger Sicherheitsbereich aktivierbar ist, wobei der Sicherheitsort die Ausgangsposition und die zugeordnete Position für den Sicherheitsbereich bildet.

Die Aufgabe wird weiter gelöst gemäß Anspruch 23 mit einem Verfahren mit einem redundanten Sicherheitssystem für eine mobile Maschine, mit mindestens einer Steuerung, mit einem ersten Lokalisierungssystem zur Ortung einer Position mindestens eines Sicherheitsortes, mit einem Erfassungssystem zur Erfassung eines Merkmals des Sicherheitsortes, wobei mittels dem Lokalisierungssystem eine Position des Sicherheitsortes erfasst wird, und mittels dem Erfassungssystem ein Merkmal des Sicherheitsortes erfasst wird, wobei bei Erfassung der Position des Sicherheitsortes und des Merkmals des Sicherheitsortes mittels der Steuerung ein zu dem Sicherheitsort zugehöriger Sicherheitsbereich aktiviert wird, wobei der Sicherheitsort die Ausgangsposition und die zugeordnete Position für den Sicherheitsbereich bildet.

Der Sicherheitsort kann synonym auch als Sicherheitsposition bezeichnet werden. Der Sicherheitsbereich kann synonym auch als Sicherheitsfläche bezeichnet werden.

Der Sicherheitsort (Safe Point of Interest, SPol) ist eine vereinfachte Variante einer sicheren Positionierung, die sich auf eine Detektion besonderer Positionen in einer Automatisierungsanwendung beschränkt, an denen es beispielsweise erforderlich ist, das Sicherheitssystem bzw. eine Schutzeinrichtung oder eine Sicherheitsfunktion der mobilen Maschine anzupassen, um sowohl einen Personenschutz wie auch eine Maschinenverfügbarkeit zu gewährleisten.

Der Verwendungszweck des Sicherheitssystems besteht darin, besondere Gefahrenpunkte zu erkennen, an denen die Sicherheitsfunktion, die im Allgemeinen zur Absicherung der mobilen Maschine verwendet wird, nicht ausreicht, weil sie nicht den Anforderungen einer Automatisierungsfunktion entspricht. Diese Punkte oder Orte werden hier als Sicherheitsorte (Safe Point of Interest, SPol) bezeichnet. Alle diese Sicherheitsorte müssen mit einem ausreichenden Sicherheitsniveau (z. B. Performance Level d, PL d) erkannt werden und ermöglichen es der Anwendung beispielsweise auf eine geeignete sekundäre Sicherheitsfunktion umzuschalten.

Die Erfindung nutzt ein bestehendes nichtsicheres Lokalisierungssystem, um die Position zu erfassen. An den relevanten Sicherheitsorten wird dann ein zusätzliches Merkmal ausgewertet.

Dadurch wird das redundante Sicherheitssystem gebildet. Das redundante Sicherheitssystem ist dadurch auch diversitär ausgebildet, da jeweils unterschiedliche Merkmale ausgewertet werden, nämlich die Position und das unabhängige Merkmal des Sicherheitsortes.

Daraufhin ist ein zu dem Sicherheitsort zugehöriger Sicherheitsbereich aktivierbar.

Entsprechend einer Gefährdungsanforderung kann dann beispielsweise auf der Systemebene ein geeignete Sekundärsicherheitsfunktion aktiviert werden.

Das nichtsichere Lokalisierungssystem kann unterschiedlichste Technologien nutzen.

Basierend auf dem, mittels dem Sicherheitssystem ermittelten Sicherheitsort, kann dann im Rahmen ein Sicherheitsbereich bzw. eine Sicherheitsfläche (Safe Area of Interest - SAol) für eine begrenzte Fläche sicher weiter lokalisiert werden. Der Sicherheitsort bildet die Ausgangsposition und die zugeordnete Position für den Sicherheitsbereich. Hier stellt der Sicherheitsort quasi das Eintrittstor in den Sicherheitsbereich dar.

Beispielsweise kann um den Sicherheitsort dann beispielsweise mit einem Radius r, (beispielsweise 20m) ein Sicherheitsbereich gebildet bzw. aufgespannt werden, in dem dann über eine Einbindung von beispielsweise Odometriedaten eine sichere Lokalisierung auf begrenzter Fläche mit dem Überwachungsbereich ausgeführt werden kann.

Die Sicherheitsort-Funktion wird somit zum Sicherheitsbereich erweitert. Mit der Überwachung des Sicherheitsbereichs kann ein vordefinierter Bereich sicher erfasst und überwacht werden. Der Sicherheitsbereich definiert eine maximale Größe des Bereichs, in dem die Positionsinformationen als sicherheitsrelevante Informationen betrachtet werden können, die bis zum geforderten Performance Level d sicher sind. Der Sicherheitsbereich wird durch das Passieren eines Sicherheitsortes aktiviert, danach ist der Sicherheitsbereich beispielsweise für einen maximalen Radius um den Sicherheitsort aktiv. Dieser Radius definiert beispielsweise die maximale Größe eines Sicherheitsbereichs. Das Sicherheitssystem überwacht dann beispielsweise ständig mit den Informationen aus dem Lokalisierungssystem und optional aus Informationen aus einer zweiten Quelle, beispielsweise einer Odometrie, automatisch die maximale Größe des Sicherheitsbereichs. Wenn die mobile Maschine die maximal zulässige Größe eines Sicherheitsbereiches verlässt, wird der Sicherheitsbereich deaktiviert.

Sicherheitsbereiche können sich überschneiden. Wenn die mobile Maschine von einem Sicherheitsbereich zu einem anderen Sicherheitsbereich wechselt, wird der bisherige Sicherheitsbereich vom System deaktiviert, sobald der neue eingegebene Sicherheitsbereich vom System aktiviert wird. Eine Aktivierung eines Sicherheitsbereichs setzt voraus, dass ein gültiger Sicherheitsort erkannt wurde, d.h. wenn sich Sicherheitsbereiche lückenlos überlappen, muss der Sicherheitsort des nächsten Sicherheitsbereichs innerhalb des Radius des aktuell aktiven Sicherheitsbereichs liegen.

Innerhalb eines Sicherheitsbereiches kann es zusätzliche Sicherheitsgrenzen (Safe Geo Fences - SGF) geben. Diese Sicherheitsgrenzen werden auf der Grundlage von Positionsinformationen (X-, Y-Koordinaten) des Sicherheitsortes aktiviert, wenn die Anforderung eines aktiven Sicherheitsbereiches erfüllt ist. Sicherheitsgrenzen brauchen keine Teilmengen von Sicherheitsbereichen sein. Sicherheitsgrenzen können innerhalb verschiedener sich überschneidender Sicherheitsbereiche gebildet sein.

Eine Umschaltung zwischen primärer und sekundärer Sicherheitsfunktion kann auf der Grundlage von Informationen über die sichere Position des Sicherheitsortes erfolgen. Das System kann verschiedene Möglichkeiten bieten, wie die Informationen zur sicheren Position anderen Funktionen zur Verfügung gestellt werden können, die die sekundäre Sicherheitsfunktion aktivieren können:
- Als Positionsinformation bestehend aus X- und Y-Koordinaten
- Als Sicherheitsort und Sicherheitsgrenze mit zughörigen Identifikationen.

Während eines Anfahr-/Abfahrvorgangs (beispielsweise mit der Geschwindigkeit v=1 m/s) wird beispielsweise sichergestellt sein, dass die mobile Maschine vor einer Kollision anhalten kann. Um ein ordnungsgemäßes Anwendungsverhalten zu erreichen, bei dem sowohl die Produktivität als auch die Sicherheit gewährleistet sind, überschneiden sich eine sekundäre Sicherheitsfunktion, also die Aktivierung eines Schutzfeldes und die primäre Sicherheitsfunktion für die Dauer der Reaktionszeit. Dies wäre beispielsweise gemäß einer folgenden Abfolge:
1. Erkennung eines Sicherheitsortes
2. Aktivierung einer sekundären Sicherheitsfunktion
3. Primäre und sekundäre Sicherheitsfunktion sind für mindestens einen Zyklus der Systemreaktionszeit aktiv
4. Deaktivierung der primären Sicherheitsfunktion (beispielsweise Überholvorgang)
5. Beibehaltung des Sicherheitsortes mit dem Sicherheitsbereich (Sicherheitszone mit x Meter) durch Plausibilitätsprüfung zwischen Bewegung (Lokalisierung und zweite Signalquelle z.B. Encoder) und beispielsweise einer Konturinformation
6. Erkennung des Verlassens der Sicherheitsortes z. B. mittels Maßnahmen, die sicherstellen, dass das Verlassen des Sicherheitsbereiches bereits vor dem Verlassen des Sicherheitsbereiches erkannt wird (beispielsweise mindestens ein Zyklus der Systemreaktionszeit)
7. Aktivierung der primären Sicherheitsfunktion
8. Primäre und sekundäre Sicherheitsfunktion sind für mindestens einen Zyklus der Systemreaktionszeit aktiv
9. Deaktivierung der sekundären Sicherheitsfunktion

Bei der mobilen Maschine kann es sich beispielsweise um ein führerloses Fahrzeug, fahrerloses Fahrzeug bzw. autonomes Fahrzeug, um ein automatisch geführtes Fahrzeug (Automated Guided Vehicles, AGV), um einen automatisch mobilen Roboter (Automated Mobile Robots, AMR), um einen industriemobilen Roboter (Industrial Mobile Robots, IMR) oder um einen Roboter mit bewegbaren Roboterarmen handeln. Die mobile Maschine weist somit einen Antrieb auf und kann in verschiedenen Richtungen bewegt werden.

In Weiterbildung der Erfindung ist mindestens ein Entfernungssensor zur mindestens flächigen Überwachung eines Überwachungsbereiches oder Schutzfeldes vorgesehen. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren oder Triangulationsverfahren ermittelt.

In Weiterbildung der Erfindung ist das Erfassungssystem ein Identifizierungssystem zur Identifizierung des Sicherheitsortes, wobei mittels dem Identifizierungssystem eine Identität des Sicherheitsortes identifizierbar ist, wobei bei Erfassung der Position des Sicherheitsortes und der Identifizierung des Sicherheitsortes ein zu dem Sicherheitsort zugehöriger Sicherheitsbereich aktivierbar ist.

Die Erfindung nutzt ein bestehendes nichtsicheres Lokalisierungssystem, um die Position zu erfassen. An den relevanten Sicherheitsorten wird dann ein zusätzliches Merkmal für die Identifizierung angeordnet und mit dem Identifizierungssensor identifiziert.

Anhand der beiden unabhängigen Merkmale nämlich der Position und der Identifikation wird der Sicherheitsort sicher im Sinne der funktionalen Sicherheit erkannt. Dadurch wird das redundante Sicherheitssystem gebildet. Das redundante Sicherheitssystem ist dadurch auch diversitär ausgebildet, da jeweils unterschiedliche Merkmale ausgewertet werden, nämlich die Position und die Identifikation des Sicherheitsortes.

Die Aktivierung eines Sicherheitsortes erfolgt auf der Grundlage von Positionsinformationen und der zusätzlichen Identifizierung beispielsweise einer Kennung an dem Sicherheitsort.

Ein Sicherheitsort wird durch zwei Merkmale, nämlich die Position bzw. des Ortes und die Identität bzw. Kennung in der Anlagenumgebung definiert. Diese Merkmale sind unabhängig und unterschiedlich voneinander.

Sicherheitsort-Identifizierungsinformationen können auf verschiedenen Technologien basieren, wie z.B. optische Merkmale (Kontur eines Sicherheitsortes, Remissionwerte eines Sicherheitsortes, usw.), Funketiketten oder Transponder, wie beispielsweise RFID-Transponder oder UWB Transponder, oder beispielsweise Strichkodes oder Barcodes wie beispielsweise 1D-Barcodes oder 2D Barcodes oder ein zweites Lokalisierungssystem, welches über ausreichend diversitäre Informationen verfügt, usw.

Ein Sicherheitsort und damit ein Sicherheitsbereich wird durch zwei unabhängige Merkmale eines Sicherheitsortes definiert, seine Position (X-, Y-Koordinaten) und eine Identifizierungs-, Kennungs- oder Kennzeichnungssignatur (z. B. RFID-Code). Diese Informationen werden beispielsweise als verifizierte Informationen in einer Karte oder einer anderen Art von Datei gespeichert. In dieser Datei werden die Position und die Identifizierungs-Signatur mit ihren Korrelationen als Datensatz gespeichert. Diese Informationen sind für das Sicherheitssystem als Konfigurationsinformationen verfügbar.

Die Erkennung eines Sicherheitsortes kann durch das Identifizierungssystem oder durch die Identifikationseinheit, die auf einem Identifier-Sensor basiert, ausgelöst werden. Sobald eine der beiden Einheiten (Lokalisierungssystem oder Identifizierungssystem) einen Sicherheitsort erkennt, wird beispielsweise ein Sicherheitsort-Erkennungs-Toleranzbereich aktiv, d.h. der zweite Kanal (Lokalisierungssystem oder Identifizierungssystem) muss beispielsweise den Sicherheitsort ebenfalls innerhalb dieser Toleranz erkennen. Der Sicherheitsbereich wird aktiviert, sobald beide Kanäle (Lokalisierungssystem oder Identifizierungssystem) den Sicherheitsort erkennen.

In Weiterbildung der Erfindung erfolgt die Überwachung des Sicherheitsbereichs mittels Positionsdaten des ersten Lokalisierungssystem mittel der Steuerung, wobei eine Änderung einer Relativposition von der Steuerung auswertbar ist, wobei die Relativposition zusätzlich mittels einem Bewegungsüberwachungssystem erfasst wird.

Das Bewegungsüberwachungssystem wird beispielsweise durch einen Encoder, einen Antrieb, oder einen Odometer gebildet. Die Daten des Bewegungsüberwachungssystems werden verwendet, um die Daten der Lokalisierung zu plausibilisieren.

In Weiterbildung der Erfindung ist das Erfassungssystem ein zweites Lokalisierungssystem zur Ortung mindestens des Sicherheitsortes, wobei mittels dem ersten Lokalisierungssystem und dem zweiten Lokalisierungssystem eine Position des Sicherheitsortes erfassbar ist, wobei das ersten Lokalisierungssystem und das zweite Lokalisierungssystem unterschiedliche Sensorprinzipien oder diversitäre Informationenquellen aufweisen, wobei bei Erfassung der Position des Sicherheitsortes mit dem ersten Lokalisierungssystem und Erfassung der Position des Sicherheitsortes mit dem zweiten Lokalisierungssystem ein zu dem Sicherheitsort zugehöriger Sicherheitsbereich aktivierbar ist.

Sobald ein Sicherheitsort erkannt wird, werden um diesen Sicherheitsort herum Sicherheitsbereiche aktiviert. Ausgehend von dem erkannten Sicherheitsort wird der Sicherheitsbereich als relative Positionsdifferenz in X- und Y-Richtung um den Sicherheitsort herum definiert. Die relative Positionsdifferenz wird ab dem Sicherheitsort inkrementiert. Diese Inkrementierung der relativen Position erfolgt auf der Grundlage der Informationen des ersten Lokalisierungssystems und eines Bewegungserfassungssystems (beispielsweise Encoder/Antrieb, Odometer usw.) oder des zweiten Lokalisierungssystems (beispielsweise Funklokalisierung usw.). Die relative Positionsinkrementierung zwischen erstem Lokalisierungssystem und dem Bewegungserfassungssystem bzw. dem zweiten Lokalisierungssystem wird laufend überprüft. Wenn diese Informationen nicht übereinstimmen, schaltet das Sicherheitssystem in den sicheren Zustand.

In Weiterbildung der Erfindung ist der Sicherheitsbereich mit einer vordefinierten Form aktivierbar.

Die vordefinierte Form kann eine Kreisform, eine Ellipsenform, eine Teilkreisform, eine Halbkreisform, eine Rechteckform, eine quadratische Form oder auch eine Freiform sein. Geometrische Formen lassen sich algorithmisch vereinfacht abbilden. Die Form ist dabei abhängig vom Anwendungsfall. Eine Freiform als vordefinierte Form bietet dem Anwender eine hohe Flexibilität an eine bestimmte Anwendung.

In Weiterbildung der Erfindung wird die Position des Sicherheitsortes als sicherheitsgerichtete Position innerhalb des Sicherheitsbereich in der Steuerung zur Weiterverarbeitung zur Verfügung gestellt. Beispielsweise wird die sicherheitsgerichtete Position mittels Prüfsummen gesichert, so dass die Daten der sicherheitsgerichteten Position fehlersicher sind.

In Weiterbildung der Erfindung wird die Position des Sicherheitsortes als sicherheitsgerichtete Position innerhalb des Sicherheitsbereich mittels Kommunikationsnetzwerk, beispielsweise mittels Ethernet, für externe Komponenten zur Verfügung gestellt. Beispielsweise wird die sicherheitsgerichtete Position mittels Prüfsummen gesichert, so dass die Daten der sicherheitsgerichteten Position fehlersicher mittels Kommunikationsnetzwerk übertragbar sind.

In Weiterbildung der Erfindung wird die Position des Sicherheitsortes als diskrete Kennungen, beispielsweise dem Ort zugeordnete Nummern, mittels Kommunikationsnetzwerk, beispielsweise mittels Ethernet, für externe Komponenten zur Verfügung gestellt. Durch die Kennungen ist die Position des Sicherheitsortes leichter identifizierbar und zuordenbar.

In Weiterbildung der Erfindung ist der Sicherheitsbereich in Sicherheitsgrenzen unterteilbar. Innerhalb eines Sicherheitsbereiches kann es zusätzliche Sicherheitsgrenzen (Safe Geo Fences - SGF) geben. Diese Sicherheitsgrenzen werden auf der Grundlage von Positionsinformationen (X-, Y-Koordinaten) des Sicherheitsortes aktiviert, wenn die Anforderung eines aktiven Sicherheitsbereiches erfüllt ist. Sicherheitsgrenzen brauchen keine Teilmengen von Sicherheitsbereichen sein. Sicherheitsgrenzen können innerhalb verschiedener sich überschneidender Sicherheitsbereiche gebildet sein.

In Weiterbildung der Erfindung sind die Sicherheitsgrenzen mit einer vordefinierten Form aktivierbar. Die vordefinierte Form kann eine Kreisform, eine Ellipsenform, eine Teilkreisform, eine Halbkreisform, eine Rechteckform, eine quadratische Form oder auch eine Freiform sein. Geometrische Formen lassen sich algorithmisch vereinfacht abbilden. Die Form ist dabei abhängig vom Anwendungsfall. Eine Freiform als vordefinierte Form bietet dem Anwender eine hohe Flexibilität an eine bestimmte Anwendung.

In Weiterbildung der Erfindung wird die Sicherheitsgrenze als diskrete Kennungen, beispielsweise mittels dem Ort zugeordnete Nummern, mittels dem Kommunikationsnetzwerk, beispielsweise mittels Ethernet für externe Komponenten zur Verfügung gestellt. Durch die Kennungen ist die Sicherheitsgrenze leichter identifizierbar und zuordenbar.

In Weiterbildung der Erfindung weist das redundante Sicherheitssystem mindestens zwei Steuerungen auf.

Die Berechnung vom Sicherheitsort und Sicherheitsbereich findet auf zwei Steuerungen, beispielsweise auf zwei Industrie-Personalcomputer (IPC) statt. Diese überwachen sich gegenseitig in ihrer Ausführung. Durch die gegenseitige Überwachung kann die sichere Ausführung der Sicherheitsfunktionen Sicherheitsort und Sicherheitsbereich, auch ohne explizite Sicherheitssteuerung realisiert werden. Die gegenseitige Überwachung beinhaltet beispielsweise unterschiedliche Mechanismen.

Dadurch, dass die Weiterbildung auf Industrie-Personalcomputer und nicht auf einer Sicherheitssteuerung ausgeführt ist, können komplexere Daten verarbeitet werden und die Integration in komplexere Automatisierungssysteme ist einfacher.

Es wird hauptsächlich auf bestehender Hardware aufgesetzt, so dass nur wenig Aufwand für eine besondere Hardware erforderlich ist.

Ein Sicherheitsort-Erkennungsalgorithmus läuft beispielsweise in zwei verschiedenen Implementierungen sowohl auf dem ersten Industrie-PC als auch auf dem zweiten Industrie-PC. Der Algorithmus hat auf beiden Industrie-PCs Zugriff auf die Informationen des Lokalisierungssystems und auf das Identifizierungssystem. Auf beiden Industrie-PCs verfügt der Algorithmus über entsprechende Regeln zwischen der Position in X-, Y-Koordinaten, Theta und dem entsprechenden vom Identifizierungssystem gelesenen Identifikator.

In Weiterbildung der Erfindung ist mindestens eine gegenseitige Überwachung der zwei Steuerungen (Industrie-PCs) vorgesehen. Insbesondere handelt es sich dabei um eine gegenseitige Watchdog-Überwachung bzw. Überprüfungseinheit-Überwachung. Jeweils eine Steuerung stellt den Watchdog bzw. die Überprüfungseinheit für die jeweils andere Steuerung bereit. Die Steuerungen überwachen sich gegenseitig mit einer klaren Zeitvorgabe. Die IPCs starten nach jedem Kommunikations-/Datenaustauschzyklus einen Zeitgeber oder Zähler einer Überprüfungseinheit neu. Der nächste Datenaustausch muss ausgeführt werden, bevor der Zeitgeber oder Zähler der Überprüfungseinheit abläuft. Wenn der Zeitgeber oder Zähler abläuft, schaltet das System in den sicheren Zustand. Zusätzlich können Zeitstempel von generierten Daten überprüft werden.

In Weiterbildung der Erfindung ist in der Steuerung eine Softwarecode-Ausführungsüberprüfungseinheit vorgesehen. Mit der Softwarecode-Ausführungsüberprüfungseinheit erfolgt eine Überprüfung der Abarbeitungsreihenfolge der Code-Ausführung der Steuerungen. Erfolgt die Abarbeitungsreihenfolge nicht mit einer Erwartungshaltung überein, liegt ein Fehler vor und es wird eine Warnmeldung ausgegeben bzw. die mobile Maschine verlangsamt oder gestoppt.

In Weiterbildung der Erfindung erfolgt eine redundante Ausführung von verwendeten Algorithmen durch die Steuerungen. D. h. verwendete Algorithmen werden in den zwei Steuerungen unabhängig voneinander ausgeführt.

In Weiterbildung der Erfindung erfolgt durch die Steuerungen eine Plausibilisierung von Sensordaten. Beispielsweise sind die Geschwindigkeitsinformationen aus einer zweiten Quelle, z. B. von Encodern, auf der ersten Steuerung verfügbar und werden über eine Schnittstelle zwischen den Steuerungen auch an die zweiten Steuerung übermittelt. Die Geschwindigkeitsinformationen aus dieser zweiten Quelle werden verwendet, um zu prüfen, ob sich beispielsweise die Ausrichtung der mobilen Maschine geändert hat. So werden beispielsweise die Geschwindigkeitsinformationen von zwei Encodern an einer Achse, von denen einer am rechten und der andere am linken Rad angebracht ist, verglichen. Sobald es einen Geschwindigkeitsunterschied gibt, wird die mobile Maschine eine Kurve fahren. Dies kann ein Auslöser für die Aktivierung dieser Prüfung sein. Als Reaktion darauf muss sich ein Orientierungswinkel des Lokalisierungssystems in die gleiche Richtung um einen Betrag ändern, der von der Information der zweiten Quelle gemessen wird. Die Informationen der zweiten Quelle und des Lokalisierungssystems werden miteinander verglichen und überprüft.

In Weiterbildung der Erfindung erfolgt eine Plausibilisierung der Daten des Lokalisierungssystems mit Daten eines Bewegungsüberwachungssystems, Odometers bzw. einer Odometrievorrichtung in der Steuerung. Es erfolgt die Überwachung des Sicherheitsbereich mittels Positionsdaten des ersten Lokalisierungssystem mittel der Steuerung, wobei eine Änderung einer Relativposition von der Steuerung auswertbar ist, wobei die Relativposition zusätzlich mittels einem Bewegungsüberwachungssystem erfasst wird. Das Bewegungsüberwachungssystem wird beispielsweise durch einen Encoder, einen Antrieb, oder einen Odometer gebildet. Die Daten des Bewegungsüberwachungssystems werden verwendet, um die Daten der Lokalisierung zu plausibilisieren.

In Weiterbildung der Erfindung sind die Steuerungen elektronisch diversitär ausgebildet. Eine Nutzung diversitärer Hardware insbesondere bei den Steuerungen, insbesondere Industrie-PCs ist vorteilhaft, da dadurch systematische Fehler, hervorgerufen durch die Elektronik bzw. die Prozessoren, vermieden bzw. verringert werden können. Beispielsweise weisen die zwei Steuerungen unterschiedliche Prozessoren von beispielsweise unterschiedlichen Herstellern, von unterschiedlichem Typ oder von unterschiedlicher Architektur auf.

In Weiterbildung der Erfindung sind die Steuerungen in der Software diversitär ausgebildet. Eine Nutzung beispielsweise diversitärer Software-Frameworks bei den Steuerungen, insbesondere Industrie-PCs ist vorteilhaft, da dadurch systematische Fehler, hervorgerufen durch die ausgeführte Software vermieden bzw. verringert werden können. Beispielsweise weisen die zwei Steuerungen unterschiedliche Software bzw. Firmware von beispielsweise unterschiedlichen Herstellern, von unterschiedlicher Kodierung, von unterschiedlichen Programmiersprachen oder von unterschiedlicher Architektur auf.

In Weiterbildung der Erfindung ist der Entfernungssensor ein Laserscanner, ein Sicherheitslaserscanner, eine 3D-Kamera, eine Stereokamera oder eine Lichtlaufzeitkamera.

Zur Kollisionsvermeidung und zum Schutz von Personen überwacht beispielsweise der Laserscanner bzw. der Sicherheitslaserscanner ein Schutzfeld, das während der Bewegung der mobilen Maschine von Personen nicht betreten werden darf. Erkennt der Laserscanner einen unzulässigen Schutzfeldeingriff, etwa ein Bein einer Person, so löst der Laserscanner ein Not-Halt der mobilen Maschine aus. In der Sicherheitstechnik eingesetzte Sensoren müssen besonders zuverlässig und eigensicher arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Zur Erfüllung dieser Sicherheitsnormen sind eine Reihe von Maßnahmen zu treffen, wie beispielsweise sichere elektronische Auswertung durch redundante und/oder diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Der Begriff funktional sicher' ist im Sinne der genannten oder vergleichbaren Normen zu verstehen, es sind also Maßnahmen ergriffen, um Fehler bis zu einem spezifizierten Sicherheitsniveau zu beherrschen. Der sichere Sensor und/oder mindestens ein nicht sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen und dabei sind demnach die genannten Anforderungen an eine Fehlersicherheit nicht erfüllt.

Eine 3D-Kamera überwacht beispielsweise ebenfalls einen Überwachungsbereich der mobilen Maschine mittels einer Vielzahl von erfassten Distanzwerten. Eine 3D-Kamera hat den Vorteil, dass ein volumenartiger Schutzbereich überwacht werden kann.

Eine Stereokamera überwacht beispielsweise ebenfalls einen Überwachungsbereich der mobilen Maschine mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger Schutzbereich überwacht werden kann.

In Weiterbildung der Erfindung ist das Lokalisierungssystem ein Funkortungssystem oder ein optoelektronisches Ortungssystem.

Die Positionsdaten können auf verschiedenen Technologien basieren, z. B. Funkttechnik nach dem 5G-Standard, UWB-Funkortung oder beispielsweise LIDAR-Lokalisierung auf Basis der Lichtlaufzeit.

Die Erkennung eines Sicherheitsortes erfolgt durch Diversität der Merkmale eines Sicherheitsortes. Diversität kann durch die Verwendung verschiedener Lokalisierungstechnologien (z. B. 5G in Kombination mit LIDAR-Lokalisierung) oder durch die Kombination von Lokalisierungstechnologie und einer Kennung einer Sicherheitsortes (z. B. LIDAR-Lokalisierung in Kombination mit RFID) erreicht werden.

Das Lokalisierungssystem kann eine Position der mobilen Maschine auf einer Fläche oder im Raum bestimmen. Die Positionsbestimmung kann beispielsweise lokal mittels Funk, beispielsweise durch ein Ultra-Wide-Band-System (UWB) erfolgen. Weiter kann zur Positionsbestimmung eine LIDAR-Navigation vorgesehen sein. Es können auch globale Navigationssysteme zum Einsatz kommen, wie beispielsweise ein GPS-System.

Das optoelektronische Ortungssystem zur mindestens flächigen Überwachung eines Überwachungsbereiches ist ein Sensor zur Entfernungsmessung. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren oder Triangulationsverfahren ermittelt.

In Weiterbildung der Erfindung ist das Identifizierungssystem ein Funkidentifizierungssystem, ein optisches Identifizierungssystem oder ein zweites Lokalisierungssystem, welches über ausreichend diversitäre Informationen verfügt.

Sicherheitsort-Identifizierungsinformationen können auf verschiedenen Technologien basieren, wie z.B. optische Merkmale (Kontur eines Sicherheitsortes, Remissionwerte eines Sicherheitsortes, usw.), Funketiketten oder Transponder, wie beispielsweise RFID-Transponder oder UWB Transponder oder beispielsweise Strichkodes oder Barcodes wie beispielsweise 1D-Barcodes oder 2D Barcodes, usw.

In Weiterbildung der Erfindung weist das Lokalisierungssystem eine Karte oder ein Kartenmodel auf, wobei die Sicherheitsorte in der Karte oder dem Kartenmodel eingetragen sind.

Geeignet sind hier insbesondere LIDAR-basierte Lokalisierungssysteme, die auf Kartendaten arbeiten. Die Karten basieren auf Konturdaten, die mit den Scannern in einer Messfahrt ermittelt wurden.

In dem Kartenmodel bzw. einer elektronischen Karte werden die unterschiedlichen Positionen der Sicherheitsorte eingetragen. Die aktuelle Position und/oder Lage der mobilen Maschine wird im Lokalisierungssystem aufgrund erfasster Umgebungskonturen kontinuierlich verarbeitet und auf Übereinstimmung mit einem Sicherheitsort geprüft. Wird eine Übereinstimmung entdeckt, so wird gemäß einer Weiterbildung der Erfindung eine Positionskennung des Sicherheitsortes an die Steuerung übertragen.

In Weiterbildung der Erfindung sind die Position und die Identität eines Sicherheitsortes über eine Korrelationsregel verknüpft.

In der Software der Steuerungen (Industrie-PCs) ist eine Korrelationsregel, beispielsweise eine Tabelle, ein Softwarecode oder Ähnliches abgelegt, in welcher eine Zuordnung zwischen der Position und der Identität eines Sicherheitsortes verknüpft werden. Beispielsweise wird die Position und die Identität eines Sicherheitsortes im Kreuzvergleich überprüft.

Wenn beide Teilsysteme stimmige und aufeinander zuordenbare Kennungen liefern, dann ist ein Sicherheitsort erkannt und die Steuerung kann den Sicherheitsbereich aktivieren. Die Steuerung kann darüber hinaus auf eine andere Schutzmaßnahme bzw.

Sicherheitsfunktion umschalten. Das Umschalten der Schutzmaßnahme kann beispielsweise ein Umschalten von Schutzfeldern, eine Größen- oder Formanpassung von Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

Wenn die Position und die Identität eines Sicherheitsortes nicht übereinstimmen, dann erkennt das Sicherheitssystem einen Fehler und wechselt in den sicheren Zustand, d. h. das Sicherheitssystem gibt einen internen Statusbereich der Software aus und an digitalen Ausgängen ein LOW-Signal aus.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine mobile Maschine mit einem redundanten Sicherheitssystem;
- Figur 2: ein redundantes Sicherheitssystem;
- Figur 3: eine mobile Maschine an einem Sicherheitsort mit einem Sicherheitsbereich;

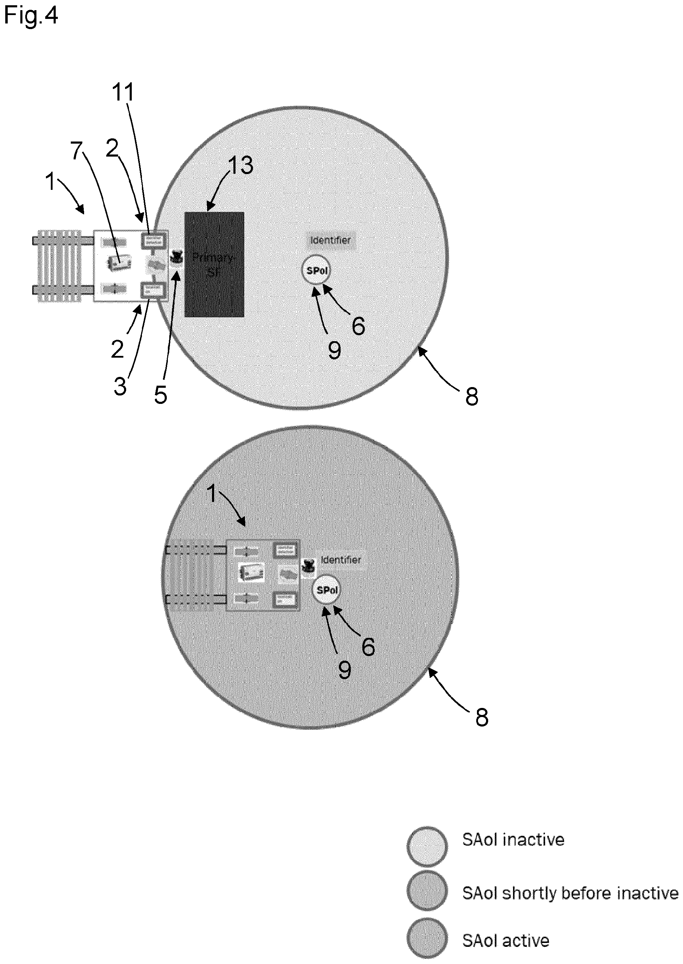

- Figur 4: eine mobile Maschine an einem Sicherheitsort mit einem Sicherheitsbereich.
- Figur 5: jeweils eine mobile Maschine und überlappende Sicherheitsbereiche.
- Figur 6: jeweils eine mobile Maschine und nicht überschneidende Sicherheitsbereiche.
- Figur 7 bis Figur 10: jeweils eine mobile Maschine in einem Bewegungsablauf mit einem Sicherheitsbereich.

In den nachfolgenden Figuren sind identische Teile mit identischen Bezugszeichen versehen.

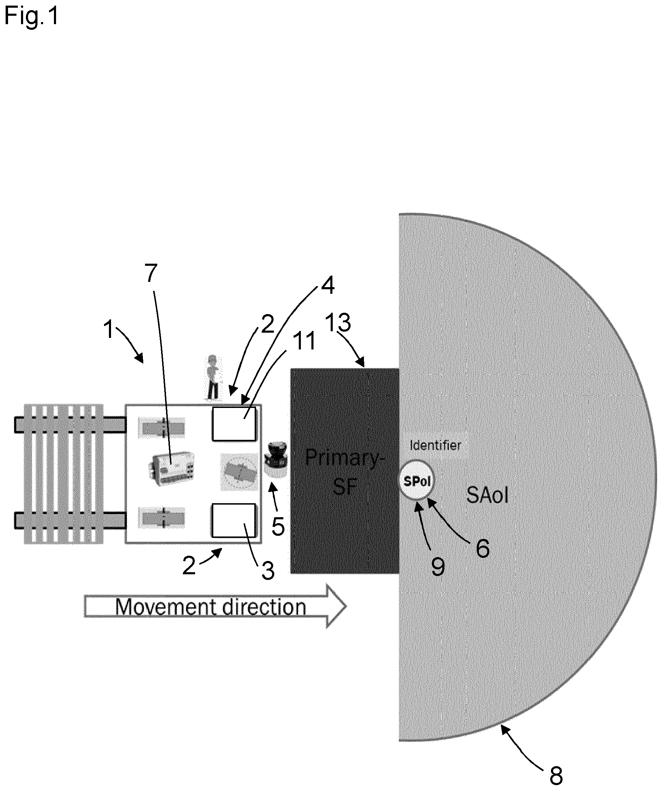

Figur 1 zeigt ein redundantes Sicherheitssystem 2 für eine mobile Maschine 1, mit mindestens einer Steuerung 7, mit einem ersten Lokalisierungssystem 3 zur Ortung einer Position mindestens eines Sicherheitsortes 6, mit einem Erfassungssystem 11 zur Erfassung eines Merkmals des Sicherheitsortes 6, wobei mittels dem Lokalisierungssystem 3 eine Position des Sicherheitsortes 6 erfassbar ist, und mittels dem Erfassungssystem 11 ein Merkmal des Sicherheitsortes 6 erfassbar ist, wobei bei Erfassung der Position des Sicherheitsortes 6 und des Merkmals des Sicherheitsortes 6 ein zu dem Sicherheitsort 6 zugehöriger Sicherheitsbereich 8 aktivierbar ist.

Optional ist mindestens ein Entfernungssensor 5 zur mindestens flächigen Überwachung eines Überwachungsbereich 13 vorgesehen.

Der Entfernungssensor 5 zur mindestens flächigen Überwachung des Überwachungsbereiches 13 ist ein Sensor zur Entfernungsmessung. Der Entfernungssensor 5 liefert Entfernungswerte im mindestens zweidimensionalen Raum. Dabei gibt der Entfernungssensor 5 Messwerte mit Distanzangaben und Winkelangaben aus. Beispielsweise wird die Entfernung mittels Lichtlaufzeitverfahren oder Triangulationsverfahren ermittelt.

Der Entfernungssensor 5 ist beispielsweise ein Laserscanner, ein Sicherheitslaserscanner, eine 3D-Kamera, eine Stereokamera oder eine Lichtlaufzeitkamera.

Bei der mobilen Maschine 1 kann es sich beispielsweise um ein führerloses Fahrzeug, fahrerloses Fahrzeug bzw. autonomes Fahrzeug usw. handeln.

Der Sicherheitsort 6 ist eine vereinfachte Variante einer sicheren Positionierung, die sich auf eine Detektion besonderer Positionen in einer industriellen Anwendung beschränkt, an denen es beispielsweise erforderlich ist, das Sicherheitssystem 2 bzw. eine Schutzeinrichtung oder eine Sicherheitsfunktion der mobilen Maschine 1 anzupassen, um sowohl einen Personenschutz wie auch eine Maschinenverfügbarkeit zu gewährleisten.

Der Verwendungszweck des Sicherheitssystems 2 besteht darin, besondere Gefahrenpunkte zu erkennen, an denen die Sicherheitsfunktion, die im Allgemeinen zur Absicherung der mobilen Maschine 1 verwendet wird, nicht ausreicht, weil sie nicht den Anforderungen einer Automatisierungsfunktion entspricht. Diese Punkte oder Orte werden hier als Sicherheitsorte 6 bezeichnet. Alle diese Sicherheitsorte 6 müssen mit einem ausreichenden Sicherheitsniveau (z. B. Performance Level d, PL d) erkannt werden und ermöglichen es der Anwendung beispielsweise auf eine geeignete sekundäre Sicherheitsfunktion umzuschalten.

Daraufhin ist ein zu dem Sicherheitsort 6 zugehöriger Sicherheitsbereich 8 aktivierbar. Optional ist mindestens ein Entfernungssensor 5 zur mindestens flächigen Überwachung des Überwachungsbereiches 13 vorgesehen.

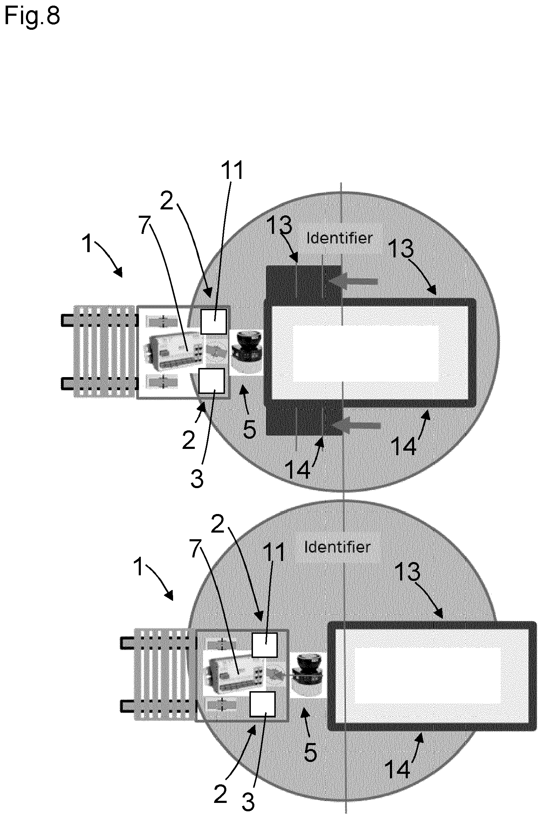

Entsprechend einer Gefährdungsanforderung kann dann beispielsweise auf der Systemebene ein geeignete Sekundärsicherheitsfunktion aktiviert werden, wie in Figur 8 dargestellt.

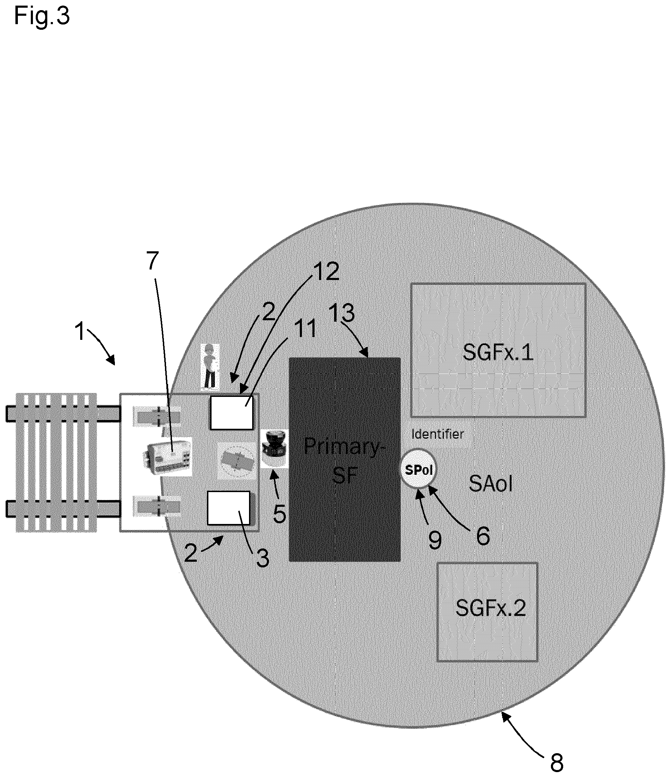

Basierend auf dem, mittels dem Sicherheitssystem 2 ermittelten Sicherheitsort 6, kann dann im Rahmen der Sicherheitsbereiche bzw. eine Sicherheitsfläche für eine begrenzte Fläche sicher weiter lokalisiert werden und mit dem Entfernungssensor 5 der Überwachungsbereich überwacht werden. Der Sicherheitsort 6 bildet die Ausgangsposition und die zugeordnete Position für den Sicherheitsbereich 8. Hier stellt der Sicherheitsort 6 quasi das Eintrittstor in den Sicherheitsbereich 8 dar. Beispielsweise kann gemäß Figur 3 um den Sicherheitsort 6 dann beispielsweise mit einem Radius r, (beispielsweise 20m) ein Sicherheitsbereich 8 gebildet bzw. aufgespannt werden, in dem dann über eine Einbindung von beispielsweise Odometriedaten eine sichere Lokalisierung auf begrenzter Fläche ausgeführt werden kann.

Die Sicherheitsort-Funktion wird somit zum Sicherheitsbereich 8 erweitert. Mit der Überwachung des Sicherheitsbereichs 8 kann ein vordefinierter Bereich sicher erfasst und überwacht werden. Der Sicherheitsbereich 8 definiert eine maximale Größe des Bereichs, in dem die Positionsinformationen als sicherheitsrelevante Informationen betrachtet werden können, die bis zum geforderten Performance Level d sicher sind. Der Sicherheitsbereich 8 wird durch das Passieren eines Sicherheitsortes 6 aktiviert, danach ist der Sicherheitsbereich 8 beispielsweise für einen maximalen Radius um den Sicherheitsort 6 aktiv. Dieser Radius definiert beispielsweise die maximale Größe eines Sicherheitsbereichs 8. Wenn die mobile Maschine 1 die maximal zulässige Größe eines Sicherheitsbereiches 8 verlässt, wird der Sicherheitsbereich 8 deaktiviert.

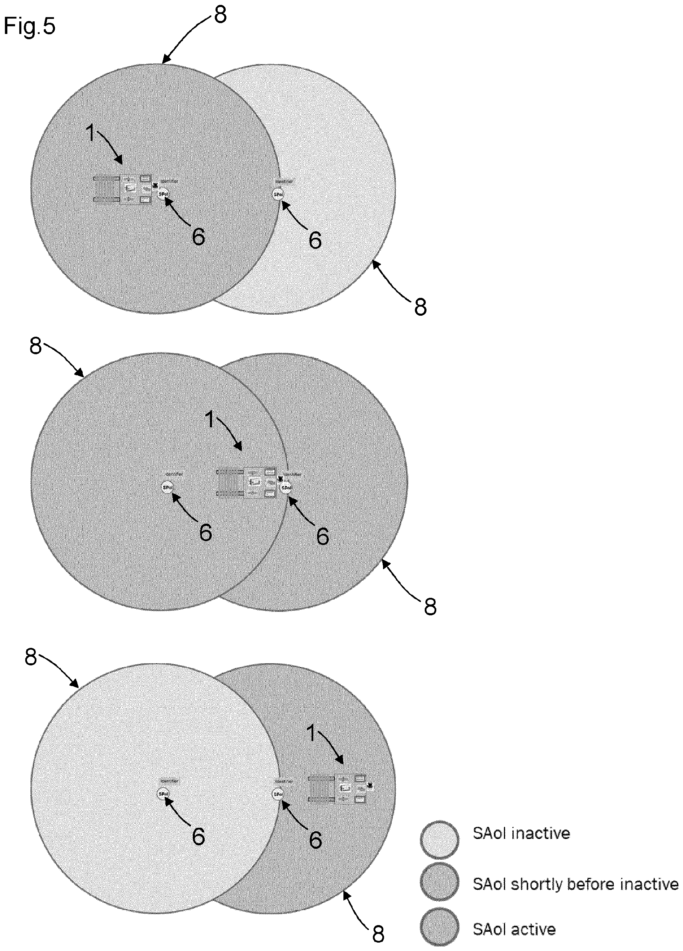

Sicherheitsbereiche 8 können sich gemäß Figur 5 überschneiden. Wenn die mobile Maschine von einem Sicherheitsbereich 8 zu einem anderen Sicherheitsbereich 8 wechselt, wird der bisherige Sicherheitsbereich 8 vom System deaktiviert, sobald der neue eingegebene Sicherheitsbereich 8 vom System aktiviert wird. Eine Aktivierung eines Sicherheitsbereichs 8 setzt voraus, dass ein gültiger Sicherheitsort 6 erkannt wurde, d.h. wenn sich Sicherheitsbereiche 8 lückenlos überlappen, muss der Sicherheitsort 6 des nächsten Sicherheitsbereichs 8 innerhalb des Radius des aktuell aktiven Sicherheitsbereichs 8 liegen.

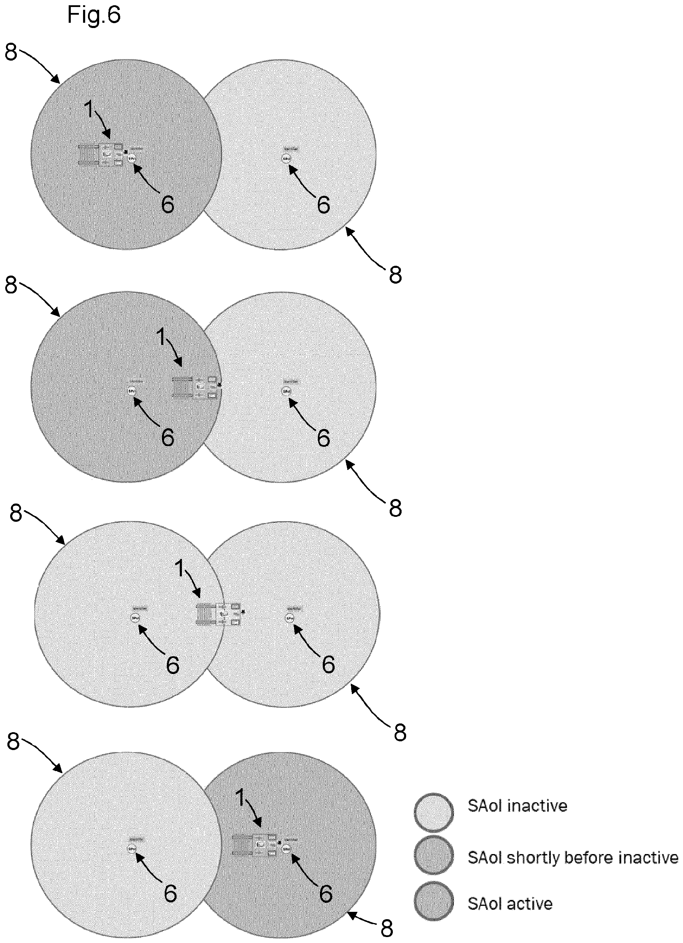

Jedoch kann gemäß Figur 6 auch keine Überschneidung zwischen den Sicherheitsbereichen 8 vorgesehen sein.

Innerhalb eines Sicherheitsbereiches 8 kann es zusätzliche Sicherheitsgrenzen (Safe Geo Fences - SGF) geben. Diese Sicherheitsgrenzen werden auf der Grundlage von Positionsinformationen (X-, Y-Koordinaten) des Sicherheitsortes 6 aktiviert, wenn die Anforderung eines aktiven Sicherheitsbereiches 8 erfüllt ist. Sicherheitsgrenzen brauchen keine Teilmengen von Sicherheitsbereichen 8 sein. Sicherheitsgrenzen können innerhalb verschiedener sich überschneidender Sicherheitsbereiche 8 gebildet sein.

Eine Umschaltung zwischen primärer und sekundärer Sicherheitsfunktion gemäß Figur 8 kann auf der Grundlage von Informationen über die sichere Position des Sicherheitsortes erfolgen. Das System kann verschiedene Möglichkeiten bieten, wie die Informationen zur sicheren Position anderen Funktionen zur Verfügung gestellt werden können, die die sekundäre Sicherheitsfunktion aktivieren können:
- Als Positionsinformation bestehend aus X- und Y-Koordinaten
- Als Sicherheitsort und Sicherheitsgrenze mit zughörigen Identifikationen.

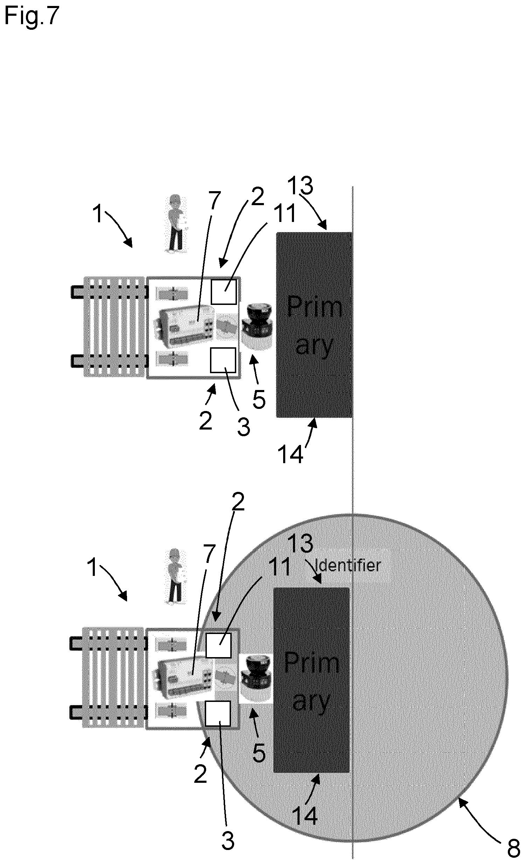

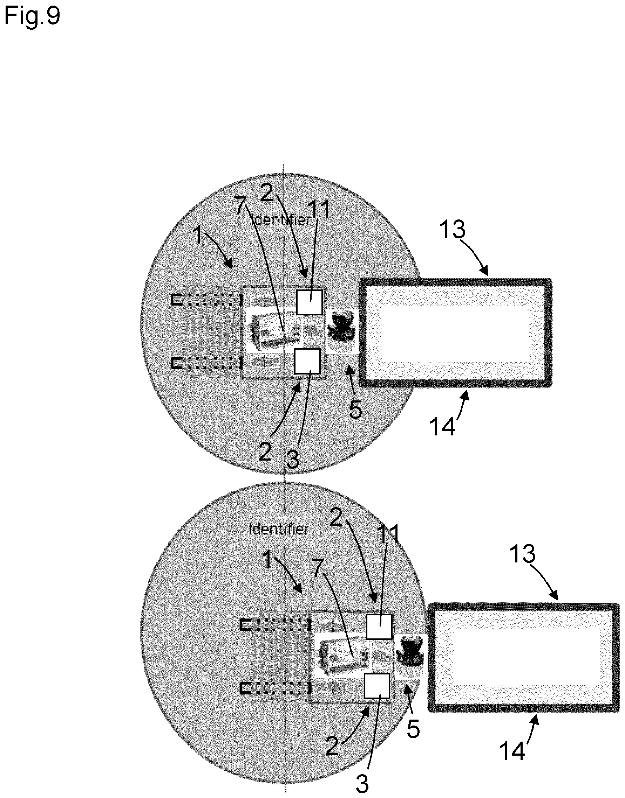

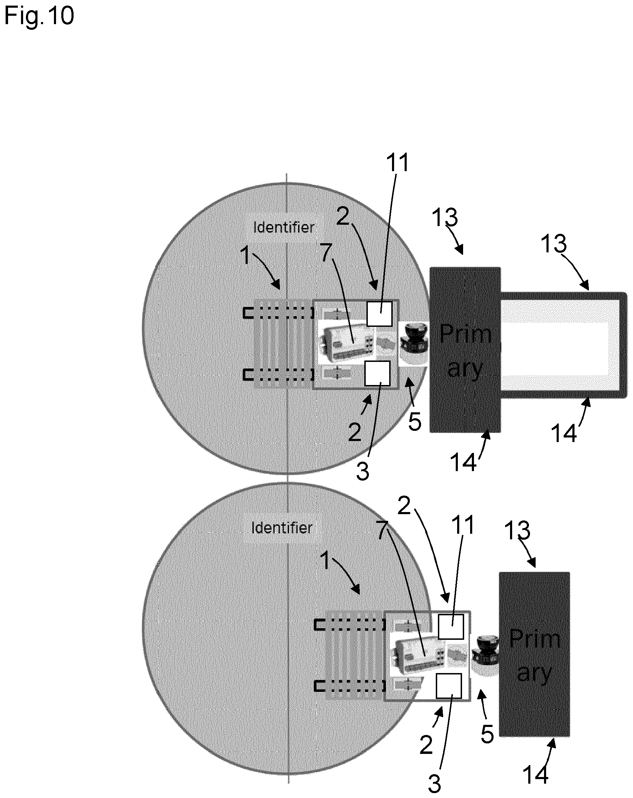

Während eines Anfahr-/Abfahrvorgangs (beispielsweise mit der Geschwindigkeit v=1 m/s) gemäß Figur 7 bis 10 wird beispielsweise sichergestellt sein, dass die mobile Maschine 1 vor einer Kollision anhalten kann. Um ein ordnungsgemäßes Anwendungsverhalten zu erreichen, bei dem sowohl die Produktivität als auch die Sicherheit gewährleistet sind, überschneiden sich eine sekundäre Sicherheitsfunktion, also die Aktivierung des Schutzfeldes 14 und die primäre Sicherheitsfunktion für die Dauer der Reaktionszeit. Dies wäre beispielsweise gemäß einer folgenden Abfolge:
1. Erkennung eines Sicherheitsortes 6
2. Aktivierung einer sekundären Sicherheitsfunktion
3. Primäre und sekundäre Sicherheitsfunktion sind für mindestens einen Zyklus der Systemreaktionszeit aktiv
4. Deaktivierung der primären Sicherheitsfunktion (beispielsweise Überholvorgang)
5. Beibehaltung des Sicherheitsortes 6 mit dem Sicherheitsbereich (Sicherheitszone mit x Meter) durch Plausibilitätsprüfung zwischen Bewegung (Lokalisierung und zweite Signalquelle z.B. Encoder) und beispielsweise einer Konturinformation
6. Erkennung des Verlassens der Sicherheitsortes 6 z. B. mittels Maßnahmen, die sicherstellen, dass das Verlassen des Sicherheitsbereiches 8 bereits vor dem Verlassen der Sicherheitsbereiches 8 erkannt wird (beispielsweise mindestens ein Zyklus der Systemreaktionszeit)
7. Aktivierung der primären Sicherheitsfunktion
8. Primäre und sekundäre Sicherheitsfunktion sind für mindestens einen Zyklus der Systemreaktionszeit aktiv
9. Deaktivierung der sekundären Sicherheitsfunktion.

Beispielsweise ist gemäß Figur 1 das Erfassungssystem 11 ein Identifizierungssystem 4 zur Identifizierung des Sicherheitsortes 6, wobei mittels dem Identifizierungssystem 4 eine Identität des Sicherheitsortes 6 identifizierbar ist, wobei bei Erfassung der Position des Sicherheitsortes 6 und der Identifizierung des Sicherheitsortes 6 ein zu dem Sicherheitsort 6 zugehöriger Sicherheitsbereich 8 aktivierbar ist.

Es wird beispielsweise ein nichtsicheres Lokalisierungssystem genutzt, um die Position zu erfassen. An den relevanten Sicherheitsorten 6 wird dann ein zusätzliches Merkmal für die Identifizierung angeordnet und mit dem Identifizierungssystem identifiziert.

Anhand der beiden unabhängigen Merkmale, nämlich der Position und der Identifikation, wird der Sicherheitsort 6 sicher im Sinne der funktionalen Sicherheit erkannt. Dadurch wird das redundante Sicherheitssystem 2 gebildet. Das redundante Sicherheitssystem 2 ist dadurch auch diversitär ausgebildet, da jeweils unterschiedliche Merkmale ausgewertet werden, nämlich die Position und die Identifikation des Sicherheitsortes 6.

Die Aktivierung eines Sicherheitsortes 6 erfolgt auf der Grundlage von Positionsinformationen und der zusätzlichen Identifizierung beispielsweise einer Kennung an dem Sicherheitsort 6.

Ein Sicherheitsort 6 wird durch zwei Merkmale, nämlich die Position bzw. des Ortes und die Identität bzw. Kennung, in der Anlagenumgebung definiert. Diese Merkmale sind unabhängig und unterschiedlich voneinander.

Sicherheitsort-Identifizierungsinformationen können auf verschiedenen Technologien basieren, wie z.B. optische Merkmale (Kontur eines Sicherheitsortes, Remissionswerte eines Sicherheitsortes, usw.), Funketiketten oder Transponder, wie beispielsweise RFID-Transponder oder UWB Transponder, oder beispielsweise Strichkodes oder Barcodes wie beispielsweise 1D-Barcodes oder 2D Barcodes, ein zweites Lokalisierungssystem, welches über ausreichend diversitäre Informationen verfügt usw.

Ein Sicherheitsort 6 und damit ein Sicherheitsbereich 8 wird durch zwei unabhängige Merkmale eines Sicherheitsortes 6 definiert, seine Position (X-, Y-Koordinaten) und eine Identifizierungs-, Kennungs- oder Kennzeichnungssignatur (z. B. RFID-Code). Diese Informationen werden beispielsweise als verifizierte Informationen in einer Karte oder einer anderen Art von Datei gespeichert. In dieser Datei werden die Position und die Identifizierungs-Signatur mit ihren Korrelationen als Datensatz gespeichert. Diese Informationen sind für das Sicherheitssystem als Konfigurationsinformationen verfügbar.

Die Erkennung eines Sicherheitsortes 6 kann durch das Identifizierungssystem 4 oder durch die Identifikationseinheit, die auf einem Identifikations-Sensor basiert, ausgelöst werden. Sobald eine der beiden Einheiten (Lokalisierungssystem 3 oder Identifizierungssystem 4) einen Sicherheitsort 6 erkennt, wird beispielsweise ein Sicherheitsort-Erkennungs-Toleranzbereich aktiv, d.h. der zweite Kanal (Lokalisierungssystem oder Identifizierungssystem) muss beispielsweise den Sicherheitsort 6 ebenfalls innerhalb dieser Toleranz erkennen. Der Sicherheitsbereich 8 wird aktiviert, sobald beide Kanäle (Lokalisierungssystem oder Identifizierungssystem) den Sicherheitsort 6 erkennen.

Beispielsweise ist gemäß Figur 3 das Erfassungssystem 11 ein zweites Lokalisierungssystem 12 zur Ortung mindestens des Sicherheitsortes 6, wobei mittels dem ersten Lokalisierungssystem 3 und dem zweiten Lokalisierungssystem 12 eine Position des Sicherheitsortes 6 erfassbar ist, wobei das erste Lokalisierungssystem 3 und das zweite Lokalisierungssystem 12 unterschiedliche Sensorprinzipien aufweisen, wobei bei Erfassung der Position des Sicherheitsortes 6 mit dem ersten Lokalisierungssystem 3 und Erfassung der Position des Sicherheitsortes mit dem zweiten Lokalisierungssystem 12 ein zu dem Sicherheitsort 6 zugehöriger Sicherheitsbereich 8 aktivierbar ist.

Der Entfernungssensor 5 kann dabei auch einen Teil des ersten Lokalisierungssystem 3 oder das zweiten Lokalisierungssystem 12 bilden.

Beispielsweise ist der Sicherheitsbereich 8 mit einer vordefinierten Form aktivierbar.

Die vordefinierte Form kann eine Kreisform gemäß Figur 3, eine Ellipsenform, eine Teilkreisform gemäß Figur 1, eine Halbkreisform gemäß Figur 1, eine Rechteckform, eine quadratische Form oder auch eine Freiform sein.

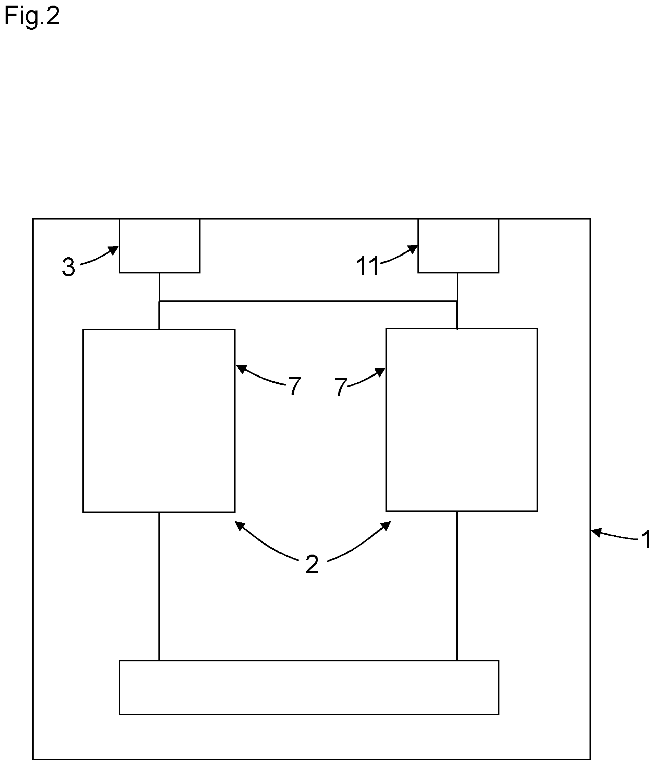

Gemäß Figur 2 weist das redundante Sicherheitssystem 2 mindestens zwei Steuerungen 7 auf.

Die Berechnung vom Sicherheitsort 6 und Sicherheitsbereich 8 findet auf zwei Steuerungen 7, beispielsweise auf zwei Industrie-Personalcomputer (IPCs) statt. Diese überwachen sich gegenseitig in ihrer Ausführung. Durch die gegenseitige Überwachung kann die sichere Ausführung der Sicherheitsfunktionen Sicherheitsort 6 und Sicherheitsbereich 8, auch ohne explizite Sicherheitssteuerung realisiert werden. Die gegenseitige Überwachung beinhaltet beispielsweise unterschiedliche Mechanismen zur Fehlererkennung bzw. zur Fehlerdiagnose.

Ein Sicherheitsort-Erkennungsalgorithmus läuft beispielsweise in zwei verschiedenen Implementierungen sowohl auf dem ersten Industrie-PC als auch auf dem zweiten Industrie-PC. Der Algorithmus hat auf beiden Industrie-PCs Zugriff auf die Informationen des Lokalisierungssystems 3 und auf das Identifizierungssystem 4. Auf beiden Industrie-PCs verfügt der Algorithmus über entsprechende Regeln zwischen der Position in X-, Y-Koordinaten, Theta und dem entsprechenden vom Identifizierungssystem 4 gelesenen Identifikator.

Beispielsweise ist das Lokalisierungssystem 3 oder 12 ein Funkortungssystem oder ein optoelektronisches Ortungssystem.

Beispielsweise ist das Identifizierungssystem 4 ein Funkidentifizierungssystem oder ein optisches Identifizierungssystem.

### Bezugszeichen:

1 mobile Maschine
2 redundantes Sicherheitssystem
3 erstes Lokalisierungssystem
4 Identifizierungssystem
5 Entfernungssensor
6 Sicherheitsort
7 Steuerung
8 Sicherheitsbereich
9 Position
11 Erfassungssystem
12 zweites Lokalisierungssystem
13 Überwachungsbereich
14 Schutzfeld

## Patentansprüche

1. Redundantes Sicherheitssystem (2) für eine mobile Maschine (1), mit mindestens einer Steuerung (7),
mit einem ersten Lokalisierungssystem (3), welches zur Ortung einer Position mindestens eines Sicherheitsortes ausgebildet ist,
mit einem Erfassungssystem (11), welches zur Erfassung eines Merkmals des Sicherheitsortes (6) ausgebildet ist,
wobei das Lokalisierungssystem (3) ausgebildet ist, eine Position (9) des Sicherheitsortes (6) zu erfassen,
und das Erfassungssystem (11) ausgebildet ist, ein Merkmal des Sicherheitsortes (8) zu erfassen,
**dadurch gekennzeichnet, dass** die Steuerung (7) ausgebildet ist, bei Erfassung der Position (9) des Sicherheitsortes (6) und des Merkmals des Sicherheitsortes (6) einen zu dem Sicherheitsort (6) zugehörigen Sicherheitsbereich (8) zu aktivieren, wobei der Sicherheitsort (6) eine Ausgangsposition und eine zugeordnete Position für den Sicherheitsbereich (8) bildet, wobei der Sicherheitsbereich (8) durch das Passieren des Sicherheitsortes (6) aktiviert wird.

2. Redundantes Sicherheitssystem (2) nach Anspruch 1, **dadurch gekennzeichnet, dass** mindestens ein Entfernungssensor (5) zur mindestens flächigen Überwachung eines Überwachungsbereiches (13) vorgesehen ist.

3. Redundantes Sicherheitssystem (2) nach Anspruch 1, **dadurch gekennzeichnet,**
**dass** das Erfassungssystem ein Identifizierungssystem (4) zur Identifizierung des Sicherheitsortes (6) ist,
wobei mittels dem Identifizierungssystem (4) eine Identität des Sicherheitsortes (8) identifizierbar ist,
wobei bei Erfassung der Position (9) des Sicherheitsortes (6) und der Identifizierung des Sicherheitsortes (6) ein zu dem Sicherheitsort (6) zugehöriger Sicherheitsbereich (8) aktivierbar ist.

4. Redundantes Sicherheitssystem (2) nach Anspruch 1, **dadurch gekennzeichnet, dass** eine Überwachung des Sicherheitsbereichs (8) mittels Positionsdaten des ersten Lokalisierungssystem (3) mittels der Steuerung (7) erfolgt, wobei eine Änderung einer Relativposition von der Steuerung (7) auswertbar ist, wobei die Relativposition zusätzlich mittels einem Bewegungsüberwachungssystem erfasst wird.

5. Redundantes Sicherheitssystem (2), nach Anspruch 1, **dadurch gekennzeichnet, dass** das Erfassungssystem ein zweites Lokalisierungssystem (3) zur Ortung mindestens des Sicherheitsortes ist,
wobei mittels dem ersten Lokalisierungssystem (3) und einem zweiten Lokalisierungssystem (11) die Position (9) des Sicherheitsortes (6) erfassbar ist,
wobei das erste Lokalisierungssystem (3) und das zweite Lokalisierungssystem (12) unterschiedliche Sensorprinzipien oder diversitäre Informationsquellen aufweisen,
wobei bei Erfassung der Position (9) des Sicherheitsortes (6) mit dem ersten Lokalisierungssystem (3) und Erfassung der Position (9) des Sicherheitsortes (6) mit dem zweiten Lokalisierungssystem (12) der zu dem Sicherheitsort (6) zugehörige Sicherheitsbereich (8) aktivierbar ist.

6. Redundantes Sicherheitssystem (2) nach Anspruch 1, **dadurch gekennzeichnet, dass** die Position (9) des Sicherheitsortes (6) als diskrete Kennungen mittels Kommunikationsnetzwerk für externe Komponenten zur Verfügung gestellt wird.

7. Redundantes Sicherheitssystem (2) nach Anspruch 1, **dadurch gekennzeichnet, dass** der Sicherheitsbereich (8) in Sicherheitsgrenzen unterteilbar ist.

8. Redundantes Sicherheitssystem (2) nach Anspruch 7, **dadurch gekennzeichnet, dass** die Sicherheitsgrenzen mit einer vordefinierten Form aktivierbar sind.

9. Redundantes Sicherheitssystem (2) nach Anspruch 8, **dadurch gekennzeichnet, dass** ein Kommunikationsnetzwerk ausgebildet ist, die Sicherheitsgrenzen als diskrete Kennungen für externe Komponenten zur Verfügung zu stellen.

10. Redundantes Sicherheitssystem (2) nach einem der vorhergehenden Ansprüche, **dadurch gekennzeichnet, dass** das redundante Sicherheitssystem (2) mindestens zwei Steuerungen (7) aufweist.

11. Redundantes Sicherheitssystem (2) nach Anspruch 10, **dadurch gekennzeichnet, dass** mindestens eine gegenseitige Überwachung der zwei Steuerungen (Industrie-PCs) vorgesehen.

12. Redundantes Sicherheitssystem (2) nach Anspruch 13, **dadurch gekennzeichnet, dass** weiter eine Softwarecode-Ausführungsüberprüfungseinheit vorgesehen ist, mit der eine Überprüfung der Abarbeitungsreihenfolge der Code-Ausführung der Steuerungen erfolgt.

13. Redundantes Sicherheitssystem (2), nach Anspruch 10, **dadurch gekennzeichnet, dass** eine redundante Ausführung von verwendeten Algorithmen durch die Steuerungen erfolgt.

14. Redundantes Sicherheitssystem (2) nach Anspruch 10, **dadurch gekennzeichnet, dass** durch die Steuerungen eine Plausibilisierung von Sensordaten erfolgt.

15. Redundantes Sicherheitssystem (2) nach Anspruch 10, **dadurch gekennzeichnet, dass** eine Plausibilisierung der Daten des Lokalisierungsystems mit Daten eines Bewegungsüberwachungssystems, Odometers oder einer Odometrievorrichtung in der Steuerung erfolgt.

16. Redundantes Sicherheitssystem (2) nach Anspruch 10, **dadurch gekennzeichnet, dass** die Steuerungen elektronisch diversitär ausgebildet sind.

17. Redundantes Sicherheitssystem (2) nach Anspruch 10, **dadurch gekennzeichnet, dass** die Steuerungen in der Software diversitär ausgebildet sind.

18. Redundantes Sicherheitssystem (2) nach Anspruch 2, **dadurch gekennzeichnet, dass** der Entfernungssensor (5) ein Laserscanner, ein Sicherheitslaserscanner, eine 3D-Kamera, eine Stereokamera oder eine Lichtlaufzeitkamera ist.

19. Redundantes Sicherheitssystem (2) nach einem der vorhergehenden Ansprüche, **dadurch gekennzeichnet, dass** das erste Lokalisierungssystem (3) ein Funkortungssystem oder ein optoelektronisches Ortungssystem ist.

20. Redundantes Sicherheitssystem (2) nach Anspruch 3, **dadurch gekennzeichnet, dass** das Identifizierungssystem (4) ein Funkidentifizierungssystem oder ein optisches Identifizierungssystem ist.

21. Redundantes Sicherheitssystem (2) nach Anspruch 1, **dadurch gekennzeichnet, dass** das erste Lokalisierungssystem (3) eine Karte oder ein Kartenmodel aufweist, wobei die Sicherheitsorte (6) in der Karte oder dem Kartenmodel eingetragen sind.

22. Redundantes Sicherheitssystem (2) nach Anspruch 3, **dadurch gekennzeichnet, dass** die Position und die Identität des Sicherheitsortes (6) über eine Korrelationsregel verknüpft sind.

23. Verfahren mit einem redundanten Sicherheitssystem (2) für eine mobile Maschine (1), mit mindestens einer Steuerung (7),
mit einem ersten Lokalisierungssystem (3) zur Ortung einer Position mindestens eines Sicherheitsortes,
mit einem Erfassungssystem (11) zur Erfassung eines Merkmals des Sicherheitsortes (6),
wobei mittels dem Lokalisierungssystem (3) eine Position (9) des Sicherheitsortes (6) erfasst wird,
und mittels dem Erfassungssystem (11) ein Merkmal des Sicherheitsortes (8) erfasst wird,
**dadurch gekennzeichnet, dass** bei Erfassung der Position (9) des Sicherheitsortes (6) und des Merkmals des Sicherheitsortes (6) mittels der Steuerung (7) ein zu dem Sicherheitsort (6) zugehöriger Sicherheitsbereich (8) aktiviert wird, wobei der Sicherheitsort (6) eine Ausgangsposition und eine zugeordnete Position für den Sicherheitsbereich (8) bildet, wobei der Sicherheitsbereich (8) durch das Passieren des Sicherheitsortes (6) aktiviert wird.

24. Verfahren nach Anspruch 23, wobei der Sicherheitsbereich (8) mit einer vordefinierten Form aktiviert wird.

25. Verfahren nach Anspruch 23, wobei die Position (9) des Sicherheitsortes (6) als sicherheitsgerichtete Position innerhalb des Sicherheitsbereichs in der Steuerung zur Weiterverarbeitung zur Verfügung gestellt wird.

26. Verfahren nach Anspruch 23, wobei die Position (9) des Sicherheitsortes (6) als sicherheitsgerichtete Position innerhalb des Sicherheitsbereichs mittels Kommunikationsnetzwerk für externe Komponenten zur Verfügung gestellt wird.

## Claims

1. A redundant safety system (2) for a mobile machine (1) having at least one controller (7);
having a first localization system (3) that is configured to localize a position of at least one safe point of interest;
having a detection system (11) that is configured to detect a feature of the safe point of interest (6),
wherein the localization system (3) is configured to detect a position (9) of the safe point of interest (6),
and the detection system (11) is configured to detect a feature of the safe point of interest (6),
**characterized in that** the controller (7) is configured to activate a safe zone of interest (8) associated with the safe point of interest (6) on detection of the position (9) of the safe point of interest (6) and of the feature of the safe point of interest (6), with the safe point of interest (6) forming a starting position and an associated position for the safe zone of interest (8), with the safe zone of interest (8) being activated by the passing through of the safe point of interest (6).

2. A redundant safety system (2) in accordance with claim 1, **characterized in that** at least one distance sensor (5) for an at least areal monitoring of a monitored zone (13) is provided.

3. A redundant system (2) in accordance with claim 1, **characterized in that** the detection system is an identification system (4) for identifying the safe point of interest (6),
wherein an identity of the safe point of interest (6) is identifiable by means of the identification system (4);
wherein a safe zone of interest (8) associated with the safe point of interest (6) can be activated on detection of the position (9) of the safe point of interest (6) and on the identification of the safe point of interest (6).

4. A redundant safety system (2) in accordance with claim 1, **characterized in that** a monitoring of the safe zone of interest (8) takes place by means of position data of the first localization system (3) by means of the controller (7), with a change of a relative position being able to be evaluated by the controller (7), with the relative position additionally being detected by means of a movement monitoring system.

5. A redundant safety system (2) in accordance with claim 1, **characterized in that** the detection system is a second localization system (3) for localizing at least the safe point of interest,
wherein the position (9) of the safe point of interest (6) is detectable by means of the first localization system (3) and a second localization system (11);
wherein the first localization system (3) and the second localization system (12) have different sensor principles or diverse information sources;
wherein the safe zone of interest (8) associated with the safe point of interest (6) can be activated on detection of the position (9) of the safe point of interest (6) by the first localization system (3) and on detection of the position (9) of the safe point of interest (6) by the second localization system (12).

6. A redundant safety system (2) in accordance with claim 1, **characterized in that** the position (9) of the safe point of interest (6) is provided as discrete identifiers by means of a communications network for external components.

7. A redundant safety system (2) in accordance with claim 1, **characterized in that** the safe zone of interest (8) can be divided into safe geo fences.

8. A redundant safety system (2) in accordance with claim 7, **characterized in that** the safe geo fences can be activated with a predefined shape.

9. A redundant safety system (2) in accordance with claim 8, **characterized in that** a communications network is configured to provide the safe geo fences as discrete identifiers for external components.

10. A redundant safety system (2) in accordance with any one of the preceding claims, **characterized in that** the redundant safety system (2) has at least two controllers (7).

11. A redundant safety system (2) in accordance with claim 10,
**characterized in that** at least a mutual monitoring of the two controllers (industrial PCs) is provided.

12. A redundant safety system (2) in accordance with claim 10,
**characterized in that** a software code performance check unit is further provided by which a check of the work through order of the code performance of the controllers takes place.

13. A redundant safety system (2) in accordance with claim 10,
**characterized in that** a redundant performance of used algorithms takes place by the controllers.

14. A redundant safety system (2) in accordance with claim 10,
**characterized in that** a plausibilization of sensor data takes place by the controllers.

15. A redundant safety system (2) in accordance with claim 10,
**characterized in that** a plausibilization of the data of the localization system takes place using data of a movement monitoring system, an odometer, or an odometer device in the controller.

16. A redundant safety system (2) in accordance with claim 10, **characterized in that** the controllers are electronically diverse.

17. A redundant safety system (2) in accordance with claim 10,
**characterized in that** the controllers in the software are diverse.

18. A redundant safety system (2) in accordance with claim 2, **characterized in that** the distance sensor (5) is a laser scanner, a safety laser scanner, a 3D camera, a stereo camera, or a time of flight camera.

19. A redundant safety system (2) in accordance with any one of the preceding claims, **characterized in that** the first localization system (3) is a radio location system sensor or an optoelectronic localization system.

20. A redundant safety system (2) in accordance with claim 3, **characterized in that** the identification system (4) is a radio identification system or an optical identification system.

21. A redundant safety system (2) in accordance with claim 1, **characterized in that** the localization system (3) has a map or a map model, with the safe points of interest (6) being entered in the map or in the map model.

22. A redundant safety system (2) in accordance with claim 3, **characterized in that** the position and the identity of the safe point of interest (6) are linked via a correlation rule.

23. A method using a redundant safety system (2) for a mobile machine (1) having at least one controller (7);
having a first localization system (3) for localizing a position of at least one safe point of interest;
having a detection system (11) for detecting a feature of the safe point of interest (6),
wherein a position (9) of the safe point of interest (6) is detected by means of the localization system (3);
and a feature of the safe point of interest (6) is detected by means of the localization system (11);
**characterized in that** a safe zone of interest (8) associated with the safe point of interest (6) is activated by means of the controller (7) on detection of the position (9) of the safe point of interest (6) and of the feature of the safe point of interest (6), with the safe point of interest (6) forming a starting position and an associated position for the safe zone of interest (8) and with the safe zone of interest (8) being activated by passing through the safe point of interest (6).

24. A method in accordance with claim 23, wherein the safe zone of interest (8) is activated with a predefined shape.

25. A method in accordance with claim 23, wherein the position (9) of the safe point of interest (6) is provided as a safety related position within the safe zone of interest in the controller for further processing.

26. A method in accordance with claim 23, wherein the position (9) of the safe point of interest (6) is provided as a safety related position within the safe zone of interest by means of a communications network for external components.

## Revendications

1. Système de sécurité redondant (2) pour une machine mobile (1), comprenant au moins une commande (7),
comprenant un premier système de localisation (3) conçu pour localiser une position d'au moins un emplacement de sécurité,
comprenant un système de détection (11) conçu pour détecter une caractéristique de l'emplacement de sécurité (6),
le système de localisation (3) étant conçu pour détecter une position (9) de l'emplacement de sécurité (6),
et le système de détection (11) étant conçu pour détecter une caractéristique de l'emplacement de sécurité (8),
**caractérisé en ce que**, lors de la détection de la position (9) de l'emplacement de sécurité (6) et de la caractéristique de l'emplacement de sécurité (6), la commande (7) est conçue pour activer une zone de sécurité (8) apparentant à l'emplacement de sécurité (6), l'emplacement de sécurité (6) formant une position initiale et une position associée pour la zone de sécurité (8), la zone de sécurité (8) étant activée par le franchissement de l'emplacement de sécurité (6).

2. Système de sécurité redondant (2) selon la revendication 1,
**caractérisé en ce qu'**il est prévu au moins un capteur de distance (5) destiné à la surveillance au moins surfacique d'une zone à surveiller (13).

3. Système de sécurité redondant (2) selon la revendication 1,
**caractérisé en ce que** le système de détection est un système d'identification (4) destiné à identifier l'emplacement de sécurité (6),
le système d'identification (4) permettant d'identifier une identité de l'emplacement de sécurité (8),
lors de la détection de la position (9) de l'emplacement de sécurité (6) et de l'identification de l'emplacement de sécurité (6), une zone de sécurité (8) associée à l'emplacement de sécurité (6) peut être activée.

4. Système de sécurité redondant (2) selon la revendication 1,
**caractérisé en ce qu'**une surveillance de la zone de sécurité (8) est effectuée par la commande (7) au moyen de données de position du premier système de localisation (3), une modification d'une position relative pouvant être évaluée par la commande (7), la position relative étant détectée en supplément au moyen d'un système de surveillance de mouvement.

5. Système de sécurité redondant (2) selon la revendication 1,
**caractérisé en ce que** le système de détection est un deuxième système de localisation (3) destiné à localiser au moins l'emplacement de sécurité,
la position (9) de l'emplacement de sécurité (6) pouvant être détectée au moyen du premier système de localisation (3) et d'un deuxième système de localisation (11), le premier système de localisation (3) et le deuxième système de localisation (12) utilisant des principes de détection différents ou des sources d'information diversitaires,
lors de la détection de la position (9) de l'emplacement de sécurité (6) avec le premier système de localisation (3) et lors de la détection de la position (9) de l'emplacement de sécurité (6) avec le deuxième système de localisation (12), la zone de sécurité (8) appartenant à l'emplacement de sécurité (6) peut être activée.

6. Système de sécurité redondant (2) selon la revendication 1,
**caractérisé en ce que** la position (9) de l'emplacement de sécurité (6) est mise à disposition de composants externes sous forme d'identifiants discrets au moyen d'un réseau de communication.

7. Système de sécurité redondant (2) selon la revendication 1,
**caractérisé en ce que** la zone de sécurité (8) peut être subdivisée en limites de sécurité.

8. Système de sécurité redondant (2) selon la revendication 7,
**caractérisé en ce que** les limites de sécurité peuvent être activées avec une forme prédéfinie.

9. Système de sécurité redondant (2) selon la revendication 8,
**caractérisé en ce qu'**un réseau de communication est conçu pour mettre à disposition de composants externes les limites de sécurité sous forme d'identifiants discrets.

10. Système de sécurité redondant (2) selon l'une des revendications précédentes,
**caractérisé en ce que** le système de sécurité redondant (2) comprend au moins deux commandes (7).

11. Système de sécurité redondant (2) selon la revendication 10,
**caractérisé en ce qu'**il est prévu au moins une surveillance mutuelle des deux commandes (PC industriels).

12. Système de sécurité redondant (2) selon la revendication 13,
**caractérisé en ce qu'**il est en outre prévu une unité de vérification de l'exécution des codes logiciels permettant de vérifier l'ordre chronologique de l'exécution des codes des commandes.

13. Système de sécurité redondant (2) selon la revendication 10,
**caractérisé en ce qu'**une exécution redondante des algorithmes utilisés est effectuée par les commandes.

14. Système de sécurité redondant (2) selon la revendication 10,
**caractérisé en ce qu'**un contrôle de vraisemblance des données des capteurs est effectué par les commandes.

15. Système de sécurité redondant (2) selon la revendication 10,
**caractérisé en ce qu'**un contrôle de vraisemblance des données du système de localisation avec des données d'un système de surveillance de mouvement, d'un odomètre ou d'un dispositif d'odométrie est effectué dans la commande.

16. Système de sécurité redondant (2) selon la revendication 10,
**caractérisé en ce que** les commandes sont réalisées de façon diversitaire sur le plan électronique.

17. Système de sécurité redondant (2) selon la revendication 10,
**caractérisé en ce que** les commandes sont réalisées de façon diversitaire quant au logiciel.

18. Système de sécurité redondant (2) selon la revendication 2,
**caractérisé en ce que** le capteur de distance (5) est un scanner laser, un scanner laser de sécurité, une caméra 3D, une caméra stéréo ou une caméra à temps de vol.

19. Système de sécurité redondant (2) selon l'une des revendications précédentes,
**caractérisé en ce que** le premier système de localisation (3) est un système de localisation radio ou un système de localisation optoélectronique.

20. Système de sécurité redondant (2) selon la revendication 3,
**caractérisé en ce que** le système d'identification (4) est un système d'identification radio ou un système d'identification optique.

21. Système de sécurité redondant (2) selon la revendication 1,
**caractérisé en ce que** le premier système de localisation (3) comprend une carte ou un modèle de carte, les emplacements de sécurité (6) étant inscrits dans la carte ou dans le modèle de carte.

22. Système de sécurité redondant (2) selon la revendication 3,
**caractérisé en ce que** la position et l'identité de l'emplacement de sécurité (6) sont liées par une règle de corrélation.

23. Procédé utilisant un système de sécurité redondant (2) pour une machine mobile (1), comprenant au moins une commande (7),
comprenant un premier système de localisation (3) destiné à localiser une position d'au moins un emplacement de sécurité,
comprenant un système de détection (11) destiné à détecter une caractéristique de l'emplacement de sécurité (6),
une position (9) de l'emplacement de sécurité (6) étant détectée au moyen du système de localisation (3),
et une caractéristique de l'emplacement de sécurité (8) étant détectée au moyen du système de détection (11),
**caractérisé en ce que**, lors de la détection de la position (9) de l'emplacement de sécurité (6) et de la caractéristique de l'emplacement de sécurité (6), une zone de sécurité (8) appartenant à l'emplacement de sécurité (6) est activée au moyen de la commande (7), l'emplacement de sécurité (6) formant une position initiale et une position associée pour la zone de sécurité (8), la zone de sécurité (8) étant activée par le franchissement de l'emplacement de sécurité (6).

24. Procédé selon la revendication 23,
dans lequel la zone de sécurité (8) est activée avec une forme prédéfinie.

25. Procédé selon la revendication 23,
dans lequel la position (9) de l'emplacement de sécurité (6) est mise à disposition sous forme de position orientée sécurité à l'intérieur de la zone de sécurité dans la commande pour un traitement ultérieur.

26. Procédé selon la revendication 23,
dans lequel la position (9) de l'emplacement de sécurité (6) est mise à disposition de composants externes sous forme de position orientée sécurité à l'intérieur de la zone de sécurité au moyen d'un réseau de communication.
